# EUROPEAN PATENT SPECIFICATION

(11) **EP 4 170 800 B1**
(45) Date of publication and mention of the grant of the patent: **21.10.2026**
(21) Application number: 21903848.6
(22) Date of filing: 08.12.2021
(51) Int. Cl.: H01M 50/178, H01M 50/188, H01M 50/197, H01M 50/30, H01M 50/557

(54) **SECONDARY BATTERY AND BATTERY MODULE INCLUDING THE SAME**
SEKUNDÄRBATTERIE UND BATTERIEMODUL DAMIT
BATTERIE SECONDAIRE ET MODULE DE BATTERIE LA COMPRENANT

(30) Priority: 08.12.2020 KR 20200170441; 02.11.2021 KR 20210148399
(43) Date of publication of application: 26.04.2023
(73) Proprietor: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); YU, Hyung-Kyun, Daejeon 34122 (KR)
(74) Representative: Plasseraud IP
(86) International application number: PCT/KR2021/018560
(87) International publication number: WO 2022/124802

(56) References cited:
- EP-B1- 3 333 955
- WO-A1-2020/235389
- CN-A- 1 862 856
- CN-A- 106 714 946
- JP-A- 2010 262 860
- JP-A- 2016 186 873
- JP-A- 2017 033 706
- JP-A- H1 024 506
- JP-B2- 6 706 014
- KR-B1- 101 904 587
- KR-B1- 102 066 013

## Description

### TECHNICAL FIELD

The present disclosure relates to a secondary battery and a battery module including the same. Particularly, the present disclosure relates to a secondary battery capable of discharging gases generated inside thereof and a battery module including the same.

### BACKGROUND ART

Recently, as fossil fuels are depleted, the price of energy sources is rising, interest in environmental pollution is increasing, and a need for eco-friendly alternative energy sources becomes an essential factor for the future life. Under these circumstances, studies about various power generation technologies, such as nuclear power, solar light, wind power and tidal power, have continued. Also, electric power storage systems for utilizing the energy generated as mentioned above more efficiently have been given continuous attentions.

Particularly, as technical development and demand for mobile instruments have been increased, batteries as energy sources have been increasingly in demand. Therefore, many studies have been conducted about batteries that meet various needs.

Typically, there is a high demand for lithium secondary batteries, such as lithium-ion batteries and lithium-ion polymer batteries, having such advantages as high energy density, discharge voltage and output stability.

Secondary batteries may be classified according to the structure of the electrode assembly including a stacked structure of a positive electrode, a negative electrode and a separator interposed between the positive electrode and the negative electrode. Typically, secondary batteries may include a jelly-roll type electrode assembly having a structure formed by winding elongated sheet-like positive electrodes and negative electrodes with separators interposed therebetween, a stacked electrode assembly formed by sequentially stacking a plurality of positive electrodes and negative electrodes cut into a predetermined size of unit with separators interposed therebetween, or the like. Recently, to solve the problems of the jelly-roll type electrode assembly and the stacked electrode assembly, a stacked/folded electrode assembly has been developed as a combination of jelly-roll type and stacked type, and the stacked/folded electrode assembly has a structure formed by sequentially winding unit cells formed by stacking a predetermined unit of positive electrodes and negative electrodes with separators interposed therebetween, while the unit cells are disposed on a separator film.

In addition, secondary batteries may be classified, according to the shape of the casing, into cylindrical secondary batteries including an electrode assembly received in a cylindrical casing, prismatic secondary batteries including an electrode assembly received in a prismatic casing, and pouch-type secondary batteries including an electrode assembly received in a pouch-type casing made of a laminate sheet.

Examples of pouch-type secondary batteries with improved sealing are described in documents JP 2016/186873 A, JP 6706014 and WO 2020/235389 A1.

As the energy density of a secondary battery is increased, the amount of gases generated inside of the secondary battery is also increased. Particularly, in the case of a pouch-type secondary battery, when the internal pressure is increased due to the gases generated in the battery and exceeds a limit of fusion strength of the pouch-type casing, the secondary battery may be released from sealing, and thus the internal gases may be discharged. In this case, there is a problem in that the life of the second battery is reduced significantly. Therefore, there is a need for solving such a problem.

### DISCLOSURE

### Technical Problem

The present disclosure is designed to solve the problems of the related art, and therefore the present disclosure is directed to providing a secondary battery capable of discharging the gases generated inside thereof effectively, and a battery module including the same.

However, the problems to be solved by the embodiments of the present disclosure are not limited to the above-mentioned problem, but may be expanded diversely within the scope of the present disclosure.

### Technical Solution

The invention relates to a secondary battery according to claim 1.The secondary battery after the invention may present any of the following features, in any technically feasible combination.

The outer surface of the inner layer and the inner surface of the outer layer may be adhered to each other.

One end of the inner layer may be exposed to the outside in the external part of the battery casing, and the other end of the inner layer is covered with the outer layer in the internal part of the battery casing.

One end of the inner layer may be covered with the outer layer in the external part of the battery casing, and the other end of the inner layer is exposed to the internal space of the battery casing in the internal part of the battery casing.

One end of the inner layer may be covered with the outer layer in the external part of the battery casing, and the other end of the inner layer is covered with the outer layer in the internal part of the battery casing.

The lead film of the outer layer covering one end of the inner layer in the external part of the battery casing may have a width of 2 mm or more in the direction of extension of the electrode lead.

The outer layer may have a thickness of 100-300 µm between the inner layer and the battery casing.

The inner layer may have a thickness of 50-150 µm.

The outer layer may have a gas permeability of 4-40 barrer at 60°C.

The outer layer may have a water infiltration amount of 0.02-0.2 g at 25°C and 50% RH for 10 years.

The inner layer may have a gas permeability of 1.6 e⁵ to 1.6 e⁷ barrer.

The outer layer may include a polyolefin-based resin, and the polyolefin-based resin includes at least one material selected from the group consisting of polypropylene, polyethylene and polyvinyl difluoride (PVDF).

The inner layer may include at least one material selected from the group consisting of polyolefin-based resin, fluorinated resin, natural materials, glass fibers, ceramic fibers and metal fibers.
the polyolefin-based resin may include at least one material selected from the group consisting of polypropylene, polyethylene and polyvinyl difluoride (PVDF), the fluorinated resin includes at least one material selected from the group consisting of polytetrafluoroethylene and polyvinylidene fluoride, and the natural material includes at least one material selected from the group consisting of cotton and wool.

The outer layer may be partially disposed between the inner layer and one surface of the electrode lead.

The battery casing may include an upper casing and a lower casing, the upper sealing portion of the upper casing and the lower sealing portion of the lower casing are bound to each other, and the lead film is disposed between the upper sealing portion and the lower sealing portion.

The lead film may be formed to have a larger length as compared to the upper sealing portion and the lower sealing portion in the direction of protrusion of the electrode lead, and the lead film is exposed in each of the internal part and external part of the battery casing.

The area of the lead film exposed outside of the battery casing may be the same as the area of the lead film exposed inside of the battery casing.

The area of the lead film exposed outside of the battery casing may be larger than the area of the lead film exposed inside of the battery casing.

The outer layer may include an upper outer layer disposed between the upper sealing portion and the electrode lead, and a lower outer layer disposed between the lower sealing portion and the electrode lead.

The inner layer may include an upper inner layer covered with the upper outer layer, and a lower inner layer covered with the lower outer layer.

The upper outer layer may include a first upper outer layer and a second upper outer layer, and the upper inner layer is disposed between the first upper outer layer and the second upper outer layer.

The lower outer layer may include a first lower outer layer and a second lower outer layer, and the lower inner layer is disposed between the first lower outer layer and the second lower outer layer.

The inner layer may be in contact with one surface of the electrode lead.

The invention also relates to a battery module including the secondary battery as defined above.

### Advantageous Effects

According to the present disclosure, it is possible to discharge the gases generated inside of a secondary battery effectively by providing a lead film having high air permeability in the vicinity of an electrode lead.

The effects of the present disclosure are not limited to the above-mentioned effect, but the other effects not mentioned herein will become more fully apparent from the description of the present disclosure.

### DESCRIPTION OF DRAWINGS

FIG. 1 is an exploded perspective view of the secondary battery according to an embodiment of the present disclosure.
FIG. 2 is a perspective view illustrating the secondary battery as shown in FIG. 1, after sealing.
FIG. 3 is a sectional view taken along line A-A' in FIG. 2.
FIG. 4 is a partial sectional view taken by enlarging portion "C" in FIG. 3.
FIG. 5 is a sectional view taken along line B-B' in FIG. 2.
FIG. 6 is a sectional view of the secondary battery according to another embodiment of the present disclosure.
FIG. 7 is a partial sectional view taken by enlarging portion "D" in FIG. 6.
FIG. 8 is a sectional view of the secondary battery according to still another embodiment of the present disclosure.
FIG. 9 is a sectional view of the secondary battery according to yet another embodiment of the present disclosure.
FIG. 10 is a schematic view illustrating the specific constitution of the lead film according to an embodiment of the present disclosure.
FIG. 11 is a partial sectional view illustrating the shape of the lead film according to Comparative Example.
FIG. 12 and FIG. 13 are sectional views each illustrating the shape of the lead film according to another embodiment of the present disclosure.

### BEST MODE

Hereinafter, preferred embodiments of the present disclosure will be described in detail with reference to the accompanying drawings so that the present disclosure will be easily implemented by those skilled in the art. The present disclosure may, however, be embodied in many different forms and should not be construed as limited to the exemplary embodiments set forth therein.

In the description, details of well-known features and techniques may be omitted to avoid unnecessarily obscuring the presented embodiments, and the same or a similar constitutional element is marked with the same drawing numeral.

In addition, each element in the accompanying drawings is shown optionally in terms of size and thickness for the convenience of description, and thus the scope of the present disclosure is not limited to what is shown in drawings. In the drawings, several layers and regions are exaggerated in thickness for the purpose of clear presentation. Further, for the convenience of description, a part of layers and regions is exaggerated in thickness in the drawings.

Additionally, the expression "a part, such as a layer, film, region or plate, is present 'on' another part" covers that the part is present directly on another part, as well as the part is present on another part with still another part interposed between them. On the other hand, the expression "a part is present 'directly on' another part" means that there is no part between them. Further, the expression "is present 'on' a part as a standard" covers the expression "is present above or below the part as a standard", and does not necessarily mean the expression "is present on or blow toward the direction opposite to the gravity direction.

Throughout the specification, the expression 'a part includes an element' does not preclude the presence of any additional elements but means that the part may further include the other elements.

In addition, throughout the specification. The term 'planar' means the planar shape of an object as viewed from the above, and the term 'sectional' means the vertical section of an object as viewed from the lateral side.

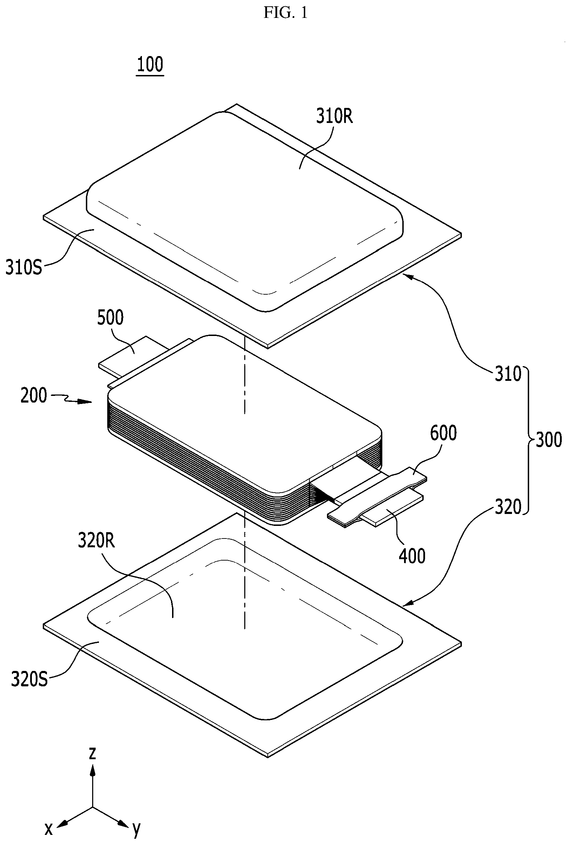

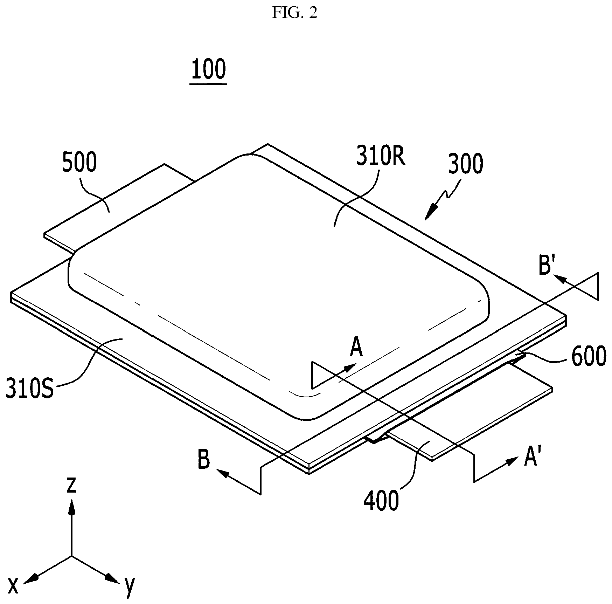

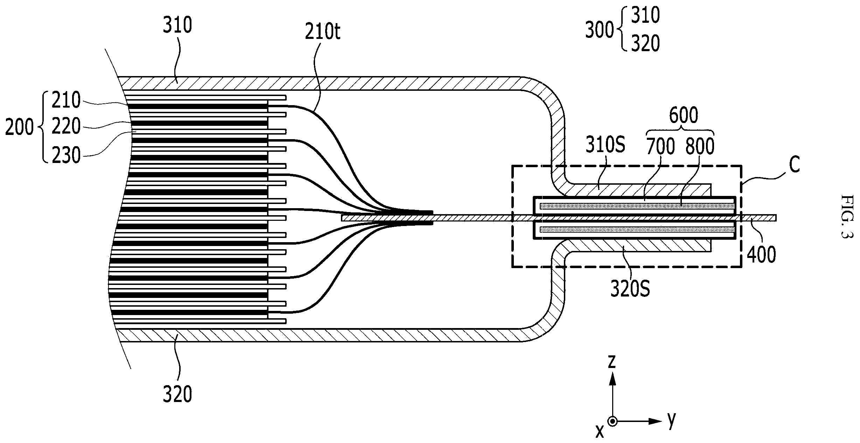

FIG. 1 is an exploded perspective view of the secondary battery according to an embodiment of the present disclosure. FIG. 2 is a perspective view illustrating the secondary battery as shown in FIG. 1, after sealing. FIG. 3 is a sectional view taken along line A-A' in FIG. 2.

Referring to FIGS. 1-3, the secondary battery 100 according to an embodiment of the present disclosure includes: an electrode assembly 200 including electrode sheets 210, 220 and a separator 230 interposed between the electrode sheets 210, 220; a pouch-like battery casing 300 in which the electrode assembly 200 is received; an electrode lead 400, 500 connected to the electrode assembly 200 and protruding out from the battery casing; and a lead film 600 covering the electrode lead 400, 500 and interposed between the electrode lead 400, 500 and the battery casing 300.

First, the electrode assembly 200 includes electrode sheets 210, 220 having an electrode tab 210t and a separator 230 interposed between the electrode sheets 210, 220. Particularly, the electrode assembly 200 according to this embodiment may be a stacked electrode assembly, a jelly-roll type electrode assembly or a stacked/folded electrode assembly. In FIG. 3, a stacked electrode assembly is shown as an example. Particularly, the stacked electrode assembly may have a structure including a plurality of electrode sheets 210, 220 stacked with a separator interposed between the electrode sheets.

Each electrode sheet 210, 220 may be formed by coating an electrode active material on an electrode current collector, and a part of the electrode current collector may protrude so that an electrode tab 210t may be provided. The electrode sheets 210, 220 may be divided into a positive electrode sheet and a negative electrode sheet, and a separator 230 may be interposed between the positive electrode sheet and the negative electrode sheet. For example, one electrode sheet 210 may be a positive electrode sheet, and the electrode tab 210t protruding out therefrom may be a positive electrode tab. The other electrode sheet 220 may be a negative electrode sheet, and the electrode tab (not shown) protruding out therefrom may be a negative electrode tab.

In addition, according to this embodiment, the electrode tab may be connected to the electrode lead. For example, the electrode tabs 210 having one type of polarity may be bound to one electrode lead 400, and the electrode tabs (not shown) having the other type of polarity may be bound to the other electrode lead 500. The electrode leads 400, 500 may protrude out from both ends of the battery casing 300. In FIG. 1 and FIG. 2, it is shown that two electrode leads 400, 500 protrude in the opposite directions. However, the protruding direction is not particularly limited. In other words, two electrode leads 400, 500 may protrude out from one side of the secondary battery 100 in the same direction. One of the two electrode leads 400, 500 may be a positive electrode lead, and the other may be a negative electrode lead. For example, when the electrode tab 210t shown in FIG. 3 is a positive electrode tab, the electrode lead 400 connected thereto may be a positive electrode lead.

Meanwhile, the battery casing 300 may be a pouch-type casing. The battery casing 300 may include an upper casing 310 and a lower casing 320 coupled to each other. Although it is not particularly shown, the battery casing 300 including the upper casing 310 and the lower casing 320 may be a laminate sheet including a resin layer and a metal layer. Particularly, each of the upper casing 310 and the lower casing 320 may include an inner resin layer for sealing, a metal layer for preventing infiltration of a material, and an outer resin layer as the outermost layer.

The outer resin layer may have high tensile strength and weather resistance based on its thickness to protect the pouch-type secondary battery 100 from the outside, and may show electrical insulating property. The outer resin layer may include polyethylene terephthalate (PET) resin or nylon resin. The metal layer prevents introduction of air or moisture to the internal part of the pouch-type secondary battery 100. The metal layer may include aluminum (Al). The inner resin layer may be bonded by the heat and pressure applied thereto, while the electrode assembly 200 is received in the battery casing. The inner resin layer may include casted polypropylene (CPP) or polypropylene (PP).

Each of the upper casing 310 and the lower casing 320 may have a concave receiving portion 310R, 320R capable of receiving the electrode assembly 200, and the electrode assembly 200 may be received stably therein. There is no particular limitation in the method for forming such receiving portions 310R, 320R, and a dip drawing process using a pressurizing punch may be used.

A sealing portion 310S, 320S may be provided along the outer circumference of the receiving portion 310R, 320R of each of the upper casing 310 and the lower casing 320. The upper sealing portion 310S of the upper casing 310 and the lower sealing portion 320S of the lower casing 320 may be bound to each other so that the battery casing 3000 may be sealed. Particularly, the inner resin layer of the upper sealing portion 310S and the inner resin layer of the lower sealing portion 320S may be partially molten by the heat and pressure and bound to each other, while the inner resin layers face to each other. In other words, the binding between the upper sealing portion 310S and the lower sealing portion 320S, or the binding of the upper sealing portion 310S, the lower sealing portion 320S and the lead film 600 as described hereinafter may correspond to hot fusion of binding the resin layers to each other by applying heat and pressure thereto.

Meanwhile, in FIG. 1, the upper casing 310 and the lower casing 320 each having a receiving portion and separated from each other are shown. However, it is possible to use a pouch casing made of a laminate sheet, wherein one side of the upper casing and one side of the lower casing are formed integrally with each other. It is also possible to use a pouch casing having a sheet-like structure in which any one of the upper casing and the lower casing has a receiving portion and the other has no receiving portion.

Hereinafter, the lead film 600 will be explained in more detail with reference to FIGS. 3-5. To avoid repetition of description, merely one electrode lead 400 of the two electrode leads 400, 500 will be explained, but the structure of the lead film 600 may also be formed in the other electrode lead 500.

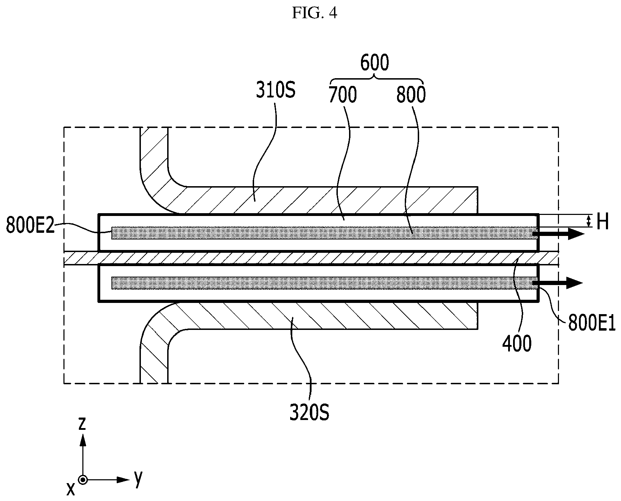

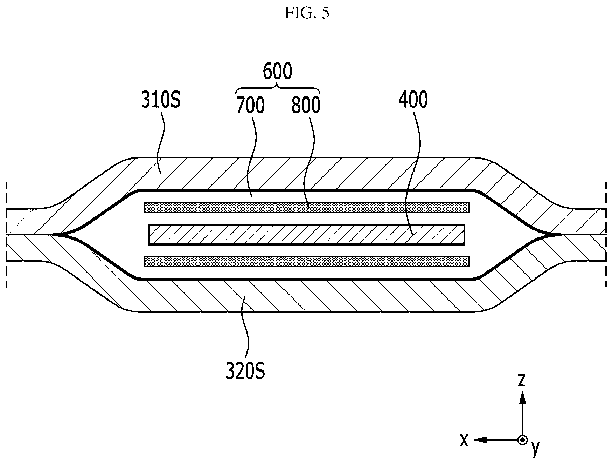

FIG. 4 is a partial sectional view taken by enlarging portion "C" in FIG. 3. FIG. 5 is a sectional view taken along line B-B' in FIG. 2.

Referring to FIGS. 3-5, the lead film 600 is formed to cover the electrode lead 400. The lead film 600 includes an outer layer 700 covering the electrode lead 400 and an inner layer 800 disposed inside of the outer layer 700. The expression 'the inner layer 800 is disposed inside of the outer layer 700' means that the outer layer 700 is disposed in such a manner that it may cover at least a part of the outer surface of the inner layer 800.

In addition, the lead film 600 may be disposed between the upper sealing portion 310S of the upper casing 310 and the lower sealing portion 320S of the lower casing 320. The lead film 600 may be disposed at a portion corresponding to a partial region of the upper sealing portion 310S and the lower sealing portion 320S. In other words, in the region free from the lead film 600, the inner resin layer of the upper sealing portion 310S and the inner layer of the lower sealing portion 320S face to each other and are bound to each other. However, in the region where the lead film 600 is disposed, each of the inner resin layer of the upper sealing portion 310S and the inner resin layer of the lower sealing portion 320S may be bound to the outer layer of the lead film 600.

Particularly, the outer layer 700 in this embodiment is for the purpose of enhancing adhesiveness and sealability, and thus it can prevent generation of a short-circuit between the electrode lead 400, 500 and the metal layer of the battery casing 300 and can improve the sealability of the pouch-type battery casing 300. When the metallic electrode lead 400, 500 is in contact with the inner resin layer of the upper sealing portion 310S or the inner resin layer of the lower sealing portion 320S, there is relatively high contact resistance to cause degradation of surface adhesion. However, when the outer layer 700 is provided according to this embodiment, it is possible to prevent such degradation of adhesion. In addition, since the outer layer 700 has insulation property, it is possible to interrupt application of electric current from the electrode lead 400, 500 to the metal layer of the pouch-type battery casing.

In addition, the outer layer 700 may function to facilitate discharge of the gases generated inside of the secondary battery, together with the inner layer 800.

According to an embodiment of the present disclosure, the outer layer 700 may have a gas permeability of 4-40 barrer, 5-20 barrer, or 4-12 barrer, at 60°C. For example, the outer layer 700 may have a carbon dioxide permeability satisfying the above-defined range. In addition, the outer layer 700 may have a gas permeability satisfying the above-defined range at 60°C, based on a thickness of 200 µm. When the outer layer 700 has a gas permeability satisfying the above-defined range, it is possible to discharge the gases generated inside of a secondary battery more effectively.

Herein, the gas permeability may be determined as follows. Two types of secondary batteries equipped with a gas line to which gases may be injected from the outside are prepared. One type of secondary battery is completely sealed, except the gas line. The other type of secondary battery is sealed, while a hole is formed and the outer layer or the inner layer is attached thereto. Then, after injecting gas through the gas line from the outside, a difference in a change in internal pressure between the battery having no outer layer or inner layer and the battery provided with the outer layer or inner layer is determined. Herein, the gas permeability of the outer layer or the inner layer may be determined through the correlation equation between a change in pressure and gas injection amount. For example, the gas injected from the outside may be carbon dioxide.

According to an embodiment of the present disclosure, the outer layer 700 may have a moisture infiltration amount of 0.02-0.2 g, 0.02-0.04 g, or 0.06-0.15 g, at 25°C and 50% RH for 10 years. For example, when polypropylene is used as the outer layer 700, the outer layer may have a moisture infiltration amount of 0.06-0.15 g. When the moisture infiltration amount of the outer layer 700 satisfies the above-defined range, it is possible to prevent infiltration of moisture introduced from the outer layer 700 more effectively.

According to an embodiment of the present disclosure, the outer layer 700 may have a gas permeability of 4-40 barrer at 60°C and a moisture infiltration amount of 0.02-0.2 g at 25°C and 50% RH for 10 years. When the gas permeability and moisture infiltration amount of the outer layer 700 satisfy the above-defined ranges, it is possible to prevent infiltration of moisture from the outside more effectively, while discharging the gases generated inside of a secondary battery.

The moisture infiltration amount of the outer layer may be determined by the method of ASTM F 1249. Herein, a system certified officially by MCOON Co. may be used for the determination of the moisture infiltration amount.

According to an embodiment of the present disclosure, the outer layer 700 may include a polyolefin-based resin. For example, the outer layer 700 may include a polyolefin-based resin satisfying the above-defined range of gas permeability and/or moisture infiltration amount. The polyolefin-based resin may include at least one material selected from the group consisting of polypropylene, polyethylene and polyvinyl difluoride (PVDF). When the outer layer 700 includes polypropylene, the outer layer 700 may have a gas permeability of 4-40 barrer at 60°C with ease.

Referring to FIG. 4, according to an embodiment of the present disclosure, the outer layer 700 disposed between the inner layer 800 and the battery casing 300 may have a thickness H of 100-300 µm, or 100-200 µm. When the outer layer 700 satisfies the above-defined range of thickness, the gases inside of the battery casing 300 may be discharged to the outside more easily.

Meanwhile, the inner layer 800 according to this embodiment is for the purpose of discharging gases, and the inner layer 800 may include a material having a relatively higher air permeability, i.e. gas permeability, as compared to the outer layer 700. In this manner, the gases generated inside of the battery during charge/discharge may be discharged to the outside through the inner layer 800. The expression 'higher air permeability' refers to a relatively larger amount of gas permeation, when the gases having a predetermined pressure are permeated in one direction. For example, the inner layer 800 may include a more porous material as compared to the outer layer 700. In other words, the inner layer 800 may include a material having a higher ratio of pores per unit volume as compared to the outer layer 700.

According to an embodiment of the present disclosure, the inner layer 800 may have a gas permeability of 1.6 e⁵ to 1.6 e⁷ barrer, or 1 e⁶ to 3 e⁶ barrer. For example, the inner layer 800 may have a carbon dioxide permeability satisfying the above-defined range.

According to an embodiment of the present disclosure, the inner layer 800 may include at least one material selected from the group consisting of a polyolefin-based resin, fluorinated resin, natural materials, glass fibers, ceramic fibers and metal fibers. For example, the inner layer 800 may include at least one material selected from the group consisting of a polyolefin-based resin, fluorinated resin, natural material, glass fibers, ceramic fibers and metal fibers satisfying the above-defined range of gas permeability. The polyolefin-based resin may include at least one material selected from the group consisting of polypropylene, polyethylene and polyvinyl difluoride (PVDF). The fluorinated resin may include at least one material selected from the group consisting of polytetrafluoroethylene and polyvinylidene fluoride, and the natural material may include at least one material selected from the group consisting of cotton and wool.

According to an embodiment of the present disclosure, the inner layer 800 may have a thickness of 50-150 µm, or 50-100 µm. When the inner layer 800 has a thickness satisfying the above-defined range, the gases inside of the battery casing 300 may be discharged to the outside more easily.

As shown in FIG. 4 and FIG. 5, the inner layer 800 may be disposed inside of the outer layer 700. Particularly, the inner layer 800 may be covered with the outer layer 700 in the direction of x axis or z axis perpendicular to the direction of protrusion of the electrode lead 400. It is possible to discharge the gases generated inside of the battery casing 300 more effectively, while reducing infiltration of moisture or foreign materials present outside of the battery casing 300 into the battery casing 300, by providing the outer layer 700 having high sealability, and then providing the inner layer 800 having higher air permeability therein. In other words, the gases generated inside of the battery casing 300 may be discharged through the inner layer 800 formed inside, while providing high sealability by the outer layer 700 formed outside. As shown in FIG. 4, the gases generated inside of the battery casing 300 may be discharged to the outside of the battery casing 300 through the inner layer 800.

In addition, as shown in FIG. 3 and FIG. 4, in the direction of the protrusion of the electrode lead 400 (direction in parallel with y axis), the lead film 600 is formed to have a larger length as compared to the upper sealing portion 310S and the lower sealing portion 320S, and thus the lead film 600 may be exposed in each of the internal part and external part of the battery casing 300. Since the outer layer 700 has a certain degree of air permeability, not as high as the air permeability of the inner layer 800, the gases generated inside of the battery casing 300 may be discharged to the outside not only through the inner layer 800 but also through the outer layer 700.

It is possible to control the gas discharge amount by controlling the exposed area of the lead film 600 in each of the internal part and the external part of the battery casing 300.

According to an embodiment of the present disclosure, the exposed area of the lead film 600 in the external part of the battery casing 300 may be the same as the exposed area of the lead film 600 in the internal part of the battery casing 300. According to another embodiment of the present disclosure, the exposed area of the lead film 600 in the external part of the battery casing 300 may be larger than the exposed area of the lead film 600 in the internal part of the battery casing 300. The gas discharge amount is in proportion to the gas discharge area and pressure. Since the pressure in the internal part of the battery casing 300 is larger than the pressure in the external part of the battery casing 300, the gases generated inside of the battery casing 300 may be discharged to the outside more easily, when the exposed area of the lead film 600 in the external part of the battery casing 300 is larger than the exposed area of the lead film 600 in the internal part of the battery casing 300.

According to an embodiment of the present disclosure, the exposed area of the lead film 600 in the external part of the battery casing 300 may be 40-80 mm². This is such a size that about 0.5-3 cc of gases may be discharged per day at 60°C based on an internal pressure of 1 atm. In addition, this is such a size that the moisture infiltration amount may be 0.02-0.2 g at 25°C under 50% RH for 10 years.

Meanwhile, the lead film 600 may have a larger width and a smaller length as compared to the electrode lead 400. In this manner, the lead film 600 can prevent the lateral side of the electrode lead 400 from being exposed to the outside, while not interrupting the electrical connection of the electrode lead 400.

Herein, referring to FIG. 4, in the external part of the battery casing 300, one end 800E1 of the inner layer 800 may be exposed to the outside to increase the gas discharge effect. In this manner, the gases inside of the battery casing 300 may be discharged to the outside of the battery casing 300 in the direction of y axis through one end 800E1 of the inner layer 800. In addition, the outer layer 700 is provided with a certain degree of air permeability, not as high as the air permeability of the inner layer 800, and thus the gases inside of the battery casing, diffused to the inner layer 800, may also be discharged in the direction of z axis through the outer layer 700. For example, the gases inside of the battery may be discharged along the z axis through the outer layer 700 exposed to the external part of the battery casing 300.

In addition, in the internal part of the battery casing 300, the other end 800E2 of the inner layer 800 may be formed to be covered with the outer layer 700. Herein, one end 800E1 and the other end 800E2 of the inner layer 800 may be both opposite ends. Depending on the material used for the inner layer 800, the inner layer 800 for gas permeation may react with the electrolyte in the battery casing 300 to affect the internal constitutional parts and to affect the battery performance adversely. Therefore, in this embodiment, the inner layer 800 may be formed in such a manner that it may not be directly exposed inside of the battery casing 300, thereby providing an advantage in that it is possible to guide gas discharge, while protecting the internal constitutional parts, as compared to simple layered arrangement of the gas permeable layer. In other words, when the material used for the inner layer 800 is one that may react with the electrolyte in the battery casing 300, it is preferred that the other end 800E2 of the inner layer 800 is formed to be covered with the outer layer 700 as mentioned above.

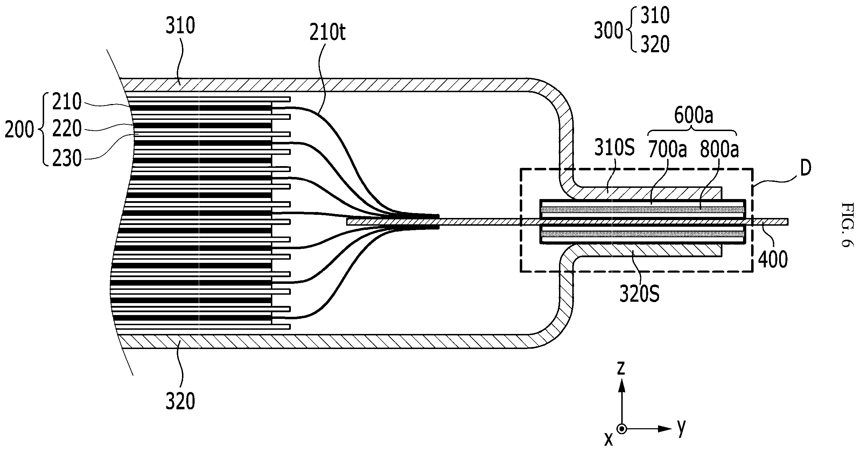

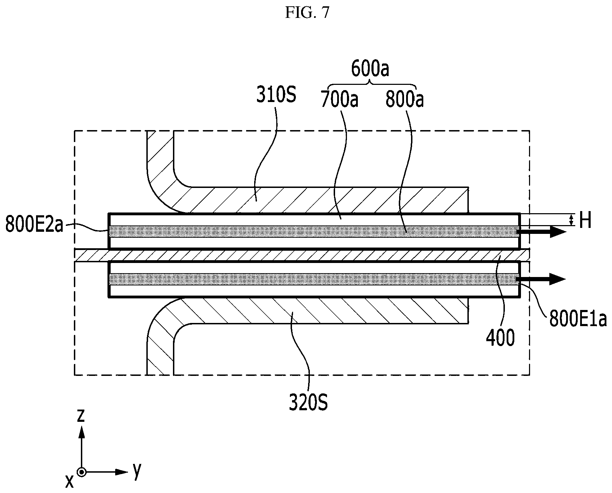

Hereinafter, the lead film 600a according to another embodiment of the present disclosure will be explained in detail with reference to FIG. 6 and FIG. 7. However, description of a part overlapping with the above-described content will be omitted.

FIG. 6 is a sectional view of the secondary battery according to another embodiment of the present disclosure. FIG. 7 is a partial sectional view taken by enlarging portion "D" in FIG. 6. Herein, FIG. 6 corresponds to the sectional view taken by yz plane in FIG. 2, like the sectional view of FIG. 3.

Referring to FIG. 6 and FIG. 7, the lead film 600a according to another embodiment of the present disclosure includes an adhesive outer layer 700a and an air permeable inner layer 800a.

Herein, one end 800E1a of the inner layer 800a may be exposed to the outside in the external part of the battery casing 300, and the other end 800E2a of the inner layer 800a may be exposed to the internal space of the battery casing 300 in the internal part of the battery casing 300. In this manner, it is possible to maximize the gas discharge effect. Herein, one end 800E1a and the other end 800E2a of the inner layer 800a may be both opposite ends. In other words, both ends 800E1a, 800E2a opposite to each other may be exposed to increase the gas discharge effect.

Herein, the inner layer 800a preferably includes a material which is stable in the environment of an electrolyte, i.e. which does not react with the electrolyte in the battery casing 300. For example, the inner layer 800a may include at least one material selected from the group consisting of polypropylene, polyvinyl difluoride (PVDF) and polytetrafluoroethylene.

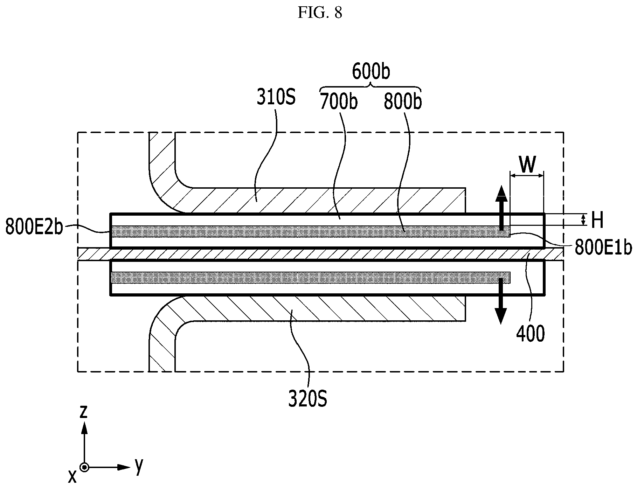

Hereinafter, the lead film 600b according to still another embodiment of the present disclosure will be explained in detail with reference to FIG. 8. However, description of a part overlapping with the above-described content will be omitted.

FIG. 8 is a sectional view of the secondary battery according to still another embodiment of the present disclosure. FIG. 8 corresponds to the sectional view taken by yz plane, like the sectional view of FIG. 4.

Referring to FIG. 8, the lead film 600b according to still another embodiment of the present disclosure includes an adhesive outer layer 700b and an air permeable inner layer 800b.

Herein, in the external part of the battery casing 300, one end 800E1b of the inner layer 800b is covered with the outer layer 700b. In addition, in the internal part of the battery casing 300, the other end 800E2b of the inner layer 800b may be exposed to the internal space of the battery casing 300. Since one end 800E1b of the inner layer 800b is covered with the outer layer 700b, the gases generated inside of the battery casing 300 may be discharged along the direction of Z axis by way of the inner layer 800b and the outer layer 700b sequentially. For example, when the lead film 600 is exposed to the outside of the battery casing 300, the gases generated inside of the battery casing 300 may be discharged along the direction of Z axis by way of the inner layer 800b and the outer layer 700b exposed to the outside of the battery casing 300 sequentially.

Herein, one end 800E1b and the other end 800E2b of the inner layer 800b may be both opposite ends. When the inner layer 800b having high permeability is exposed to the external environment, there may be a problem in that external ingredients infiltrate into the battery casing 300. Therefore, in this embodiment, the inner layer 800b is configured in such a manner that the inner layer 800b may not be directly exposed in the external part of the battery casing 300. In this manner, it is possible to reduce a possibility of infiltration of external ingredients as compared to simple layered arrangement of the gas permeable layer. Instead of this, the other end 800E2b of the inner layer 800b may be exposed in the internal space of the battery casing 300 to supplement the gas discharge effect. Herein, as mentioned above, the inner layer 800b preferably includes a material which is stable in the environment of an electrolyte, i.e. which does not react with the electrolyte in the battery casing 300. For example, the inner layer 800a may include at least one material selected from the group consisting of polypropylene, polyvinyl difluoride (PVDF) and polytetrafluoroethylene.

Referring to FIG. 8, according to an embodiment of the present disclosure, in the external part of the battery casing 300, the lead film 600b of the outer layer 700b covering one end of the inner layer 800b may have a width W of 2 mm or more, or 2-3 mm, in the direction of electrode lead extension. When the width of the lead film 600b of the outer layer 700b covering one end of the inner layer 800b in the direction of electrode lead extension satisfies the above-defined range, it is possible to easily prevent the lead film 600b from being torn, while the gases generated inside of the battery casing 300 is discharged to the outside.

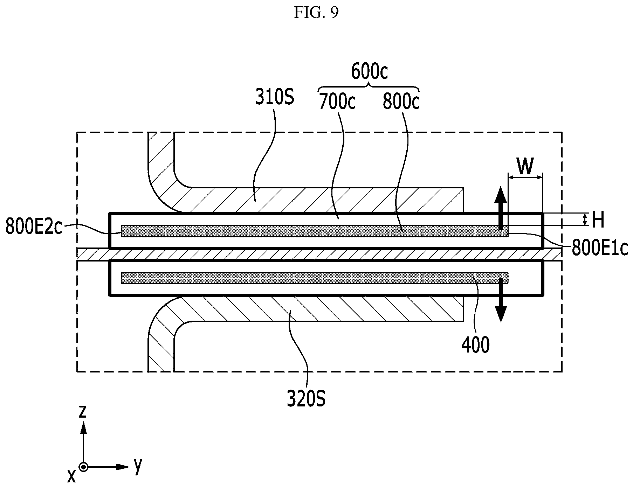

Hereinafter, the lead film 600c according to still another embodiment of the present disclosure will be explained in detail with reference to FIG. 9. However, description of a part overlapping with the above-described content will be omitted.

FIG. 9 is a sectional view of the secondary battery according to still another embodiment of the present disclosure. FIG. 9 corresponds to the sectional view taken by yz plane, like the sectional view of FIG. 4.

Referring to FIG. 9, the lead film 600c according to still another embodiment of the present disclosure includes an adhesive outer layer 700c and an air permeable inner layer 800c.

Herein, one end 800E1c of the inner layer 800c in the external part of the battery casing 300 and the other end 800E2c of the inner layer 800c in the internal part of the battery casing 300 may be covered with the outer layer 700c. Herein, one end 800E1c and the other end 800E2c of the inner layer 800c may be both opposite ends. As described above, it is likely that the inner layer 800c for gas permeation reacts with the electrolyte in the battery casing 300 to affect the internal constitutional parts and to affect the battery performance adversely. In addition, when the inner layer 800c having high permeability is exposed to the external environment, there is a problem in that the external ingredients may infiltrate into the battery casing 300. Therefore, according to this embodiment, it is intended to reduce such a risk of reaction of the inner layer 800c with the electrolyte in the battery casing 300 and to alleviate the possibility of infiltration of the external materials by covering both opposite ends 800E1c, 800E2c of the inner layer 800c with the outer layer 700c.

Meanwhile, referring to FIG. 3, FIG. 4, FIG. 7, FIG. 8 and FIG. 9, one end 800E1, 800E1a, 800E1b, 800E1c of the lead film 600, 600a, 600b, 600c according to each embodiment may be disposed further outside than the outer surface of the battery casing 300. In addition, the other end 800E2, 800E2a, 800E2b, 800E2c of the lead film 600, 600a, 600b, 600c may be disposed further inside than the inner surface of the battery casing 300.

In this manner, the lead film 600, 600a, 600b, 600c may have a maximized area of inner layer 800, 800a, 800b, 800c, and thus it is possible to discharge the gases generated inside of the battery casing 300 effectively.

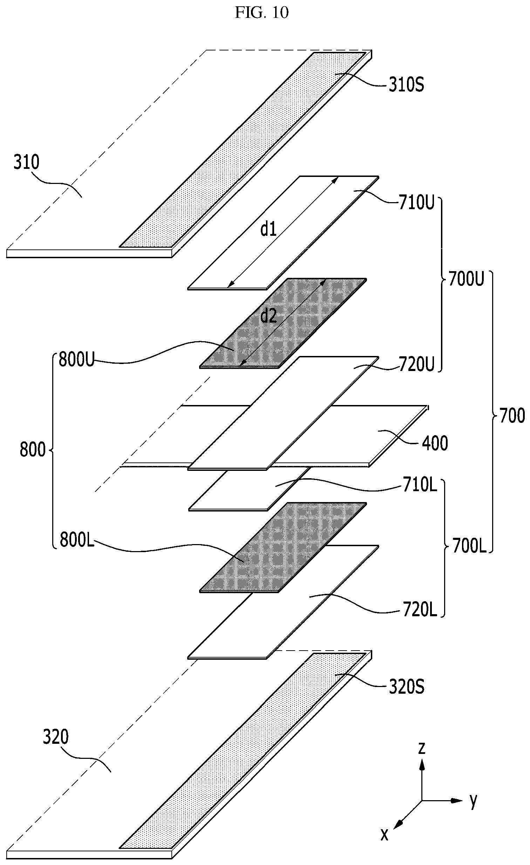

Hereinafter, the specific constitution of the lead film according to an embodiment of the present disclosure will be explained with reference to FIG. 10.

FIG. 10 is a schematic view illustrating the specific constitution of the lead film according to an embodiment of the present disclosure.

Referring to FIG. 10, the lead film according to an embodiment of the present disclosure includes an adhesive outer layer 700 and an air permeable inner layer 800 as mentioned above.

Herein, the outer layer 700 may include an upper outer layer 700U disposed between the upper sealing portion 310S of the upper casing 310 and the electrode lead 400, and a lower outer layer 700L disposed between the lower sealing portion 320S of the lower casing 320 and the electrode lead 400. Meanwhile, the inner layer 800 may include an upper inner layer 800U covered with the upper outer layer 700U and a lower inner layer 800L covered with the lower outer layer 700L.

In addition, the upper outer layer 700U may include a first upper outer layer 710U and a second upper outer layer 720U, and the upper inner layer 800U may be disposed between the first upper outer layer 710U and the second upper outer layer 720U. Herein, the width d1 of the first upper outer layer 710U and the second upper outer layer 720U may be larger than the width d2 of the upper inner layer 800U in the direction (direction in parallel with x axis) perpendicular to the direction of the protrusion of the electrode lead 400.

Further, the lower outer layer 700L may include a first lower outer layer 710L and a second lower outer layer 720L, and the lower inner layer 800L may be disposed between the first lower outer layer 710 and the second lower outer layer 720L. Similarly to the upper outer layer 700U, the width of the first lower outer layer 710L and the second lower outer layer 720L may be larger than the width of the lower inner layer 800L in the direction (direction in parallel with x axis) perpendicular to the direction of the protrusion of the electrode lead 400.

In this embodiment, when binding the first upper outer layer 710U, the upper inner layer 800U, the second upper outer layer 720U, the first lower outer layer 710L, the lower inner layer 800L and the second lower outer layer 720L, heat and pressure are applied to the adjacent layers to perform binding, and then the next layer is disposed and heat and pressure are further applied thereto to perform binding. In other words, application of heat and pressure to both opposite layers may be carried out repeatedly for each layer to obtain the lead film according to this embodiment.

The upper outer layer 710U, the second upper outer layer 720U, the first lower outer layer 710L and the second lower outer layer 720L are bound to one another to form the outer layer 700 covering the electrode lead 400. Referring to FIG. 4, FIG. 7, FIG. 8 and FIG. 9, a part of the outer layer 700, 700a, 700b, 700c may be disposed between the inner layer 800, 800a, 800b, 800c and one surface of the electrode lead 400. In other words, the inner layer 800, 800a, 800b, 800c may not be in direct contact with the electrode lead 400. This is because the second upper outer layer 720U is disposed between the upper inner layer 800U and the electrode lead 40, and the first lower outer layer 710L is disposed between the lower inner layer 800L and the electrode lead 400, as shown in FIG. 10.

In addition, as described above, the width d1 of the first upper outer layer 710U, the second upper outer layer 720U, the first lower outer layer 710L and the second lower outer layer 720L may be formed to be larger than the width d2 of the upper inner layer 800U and the lower inner layer 800L in the direction (direction in parallel with x axis) perpendicular to the direction of the protrusion of the electrode lead 400, thereby allowing the inner layer 800 to be disposed inside of the outer layer 700.

Further, the length of each of the upper outer layer 700U, the lower outer layer 700L, the upper inner layer 800U and the lower inner layer 800L may be formed to be larger than the length of the upper sealing portion 310S and the lower sealing portion 320S in the direction (direction in parallel with y axis) of the protrusion of the electrode lead 400, thereby allowing the lead film according to this embodiment to be exposed to each of the internal part and external part of the battery casing 300.

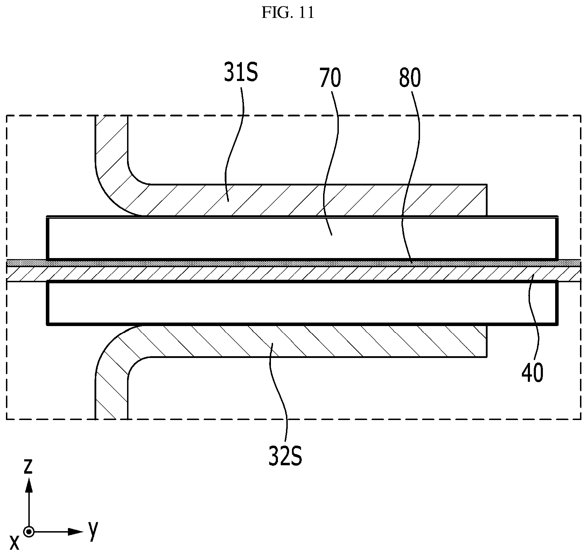

Hereinafter, the advantages of the lead film according to an embodiment of the present disclosure will be explained in detail as compared to the lead film of Comparative Example as shown in FIG. 11.

FIG. 11 is a partial sectional view illustrating the shape of the lead film according to Comparative Example.

Referring to FIG. 11, according to Comparative Example, an electrode lead 40 protrudes out by way of the gap between an upper sealing portion 310S and a lower sealing portion 320S, and the electrode lead 40 is covered with a lead film 70 between the upper sealing portion 310S and the lower sealing portion 320S. Herein, a gas permeable layer 80 for gas permeation may be formed on one surface of the electrode lead 40, and the gas permeable layer may be a metallic permeable layer including a metal or alloy material. Since the lead film 70 includes a polymer resin for the purpose of electrical insulation and sealing, the gas permeable layer 80 including a metal or alloy material may be problematic in terms of the lamination capability with the lead film 70, which may adversely affect the sealability of a secondary battery.

Unlike Comparative Example, the lead film 600 of the present disclosure as shown in FIG. 3, FIG. 4, FIG. 7, FIG. 8 and FIG. 9, i.e. the lead film 600, 600a, 600b, 600c includes the inner layer 800, 800a, 800b, 800c having relatively higher air permeability and disposed inside of the outer layer 700, 700a, 700b, 700c. Therefore, there is an advantage in that a gas discharge path can be provided in the battery casing 300 with no problem of degradation of sealability.

In addition, referring to FIG. 3, FIG. 4, FIG. 7, FIG. 8 and FIG. 9, the lead film 600, 600a, 600b, 600c includes the inner layer 800, 800a, 800b, 800c disposed inside of the outer layer 700, 700a, 700b, 700c, and the outer surface of the inner layer 800, 800a, 800b, 800c and the inner surface of the outer layer 700, 700a, 700b, 700c are adhered to each other.

Herein, such adhesion covers melt fusion between the outer layer 700, 700a, 700b, 700c and the inner layer 800, 800a, 800b, 800c through the application of heat or pressure, as well as adhesion between them by way of a separate adhesive.

Since the inner layer 800, 800a, 800b, 800c includes a material having relatively high air permeability and is adhered to the outer layer 700, 700a, 700b, 700c, it may function as a kind of physical support. In other words, according to these embodiments of the present disclosure, the inner layer 800, 800a, 800b, 800c not only functions as a gas discharge path but also functions to supplement the durability and rigidity of the lead film 600, 600a, 600b, 600c. In this manner, it is possible to prevent the problem occurring in Comparative Example, i.e. expansion of the lead film in the upward and downward directions and partial elongation of the lead film.

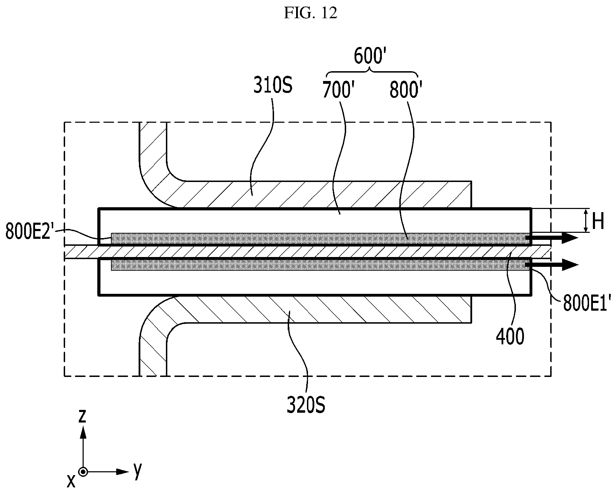

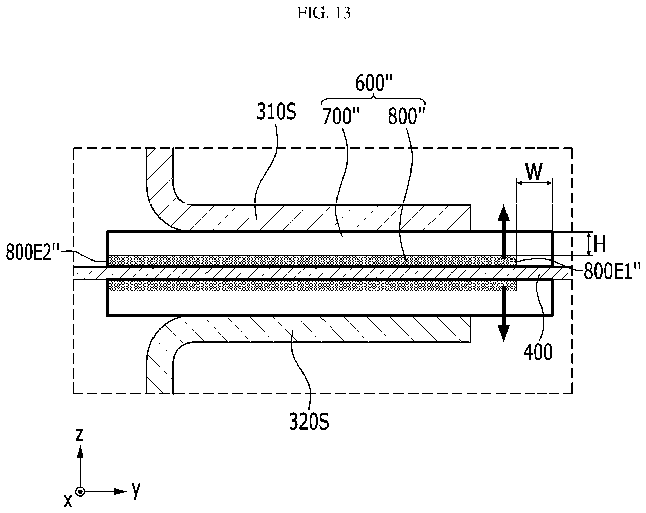

Hereinafter, the lead film according to another embodiment of the present disclosure will be explained with reference to FIG. 12 and FIG. 13.

FIG. 12 and FIG. 13 are sectional views each illustrating the shape of the lead film according to another embodiment of the present disclosure.

Referring to FIG. 12 and FIG. 13, the lead film 600', 600" may include an outer layer 700', 700" and an inner layer 800', 800". Description of the outer layer 700', 700" and the inner layer 800', 800" is overlapped with the above-described content and will be omitted. However, in these embodiments, the inner layer 800', 800" may be adhered to one surface of the electrode lead 400. The inner layer 800', 800" disposed at the top may be in contact with the top surface of the electrode lead 400, and the inner layer 800', 800" disposed at the bottom may be in contact with the bottom surface of the electrode lead 400. Unlike the embodiments as shown in FIG. 4, FIG. 7, FIG. 8 and FIG. 9, a part of the outer layer is not disposed between the inner layer 800, 800' and the electrode lead 400.

FIG. 12 illustrates that one end 800E1' of the inner layer 800' is opened and the other end 800E2' is covered with the outer layer 700', and FIG. 13 illustrates that one end 800E1" of the inner layer 800" is covered with the outer layer 700" and the other end 800E2" is opened. Although it is not specifically shown, both one end and the other end of the inner layer may be opened or may be covered with the outer layer.

Referring to FIG. 10, the lead film 600', 600" as shown in FIG. 12 and FIG. 13 may be obtained by eliminating the second upper layer 720U and the first lower outer layer 710L. In other words, the lead film 600', 600" having the inner layer 800', 800" that is in contact with one surface of the electrode lead 400 uses a reduced number of layers requiring hot fusion during the manufacture, and thus the hot fusion steps are reduced partially. Therefore, there are advantages in terms of the manufacturing process and cost savings.

According to the present disclosure, several terms for direction, such as front, rear, left, right, top and bottom, are used, but they are used merely for convenience in description and may vary depending on the position of an object or observer.

A plurality of the above-described secondary batteries may be assembled to form a battery module. Such a battery module may be mounted together with various controlling and protecting systems, such as a battery management system (BMS) and cooling system, to form a battery pack.

The secondary battery, the battery module or the battery pack may be applied to various devices, particularly, transport means, including electric bikes, electric vehicles and hybrid vehicles, but are not limited thereto. Therefore, the secondary battery, the battery module or the battery pack may be applied to various devices to which secondary batteries are applicable.

The present disclosure has been described in detail. However, it should be understood that the detailed description and specific examples, while indicating preferred embodiments of the disclosure, are given by way of illustration only.

## Claims

1. A secondary battery (100) comprising:
an electrode assembly (200) comprising electrode sheets (210, 220) and a separator (230) interposed between the electrode sheets (210, 220);
a pouch-like battery casing (300) in which the electrode assembly (200) is received;
an electrode lead (400, 500) connected to the electrode assembly (200) and protruding out from the battery casing (300); and
a lead film (600) covering the electrode lead (400, 500) and interposed between the electrode lead (400, 500) and the battery casing (300),
wherein the lead film (600) comprises an outer layer (700) covering the electrode lead and an inner layer (800) disposed inside of the outer layer (700), and
the inner layer (800) comprises a material having a higher air permeability as compared to the outer layer (700),
**characterized in that** either:
one end (800E1, 800E2) of the inner layer (800) is covered with the outer layer (700), in the internal part of the battery casing (300), the other end (800E1, 800E2) of the inner layer (800) being exposed to the outside of the battery casing (300), or
one end (800E1, 800E2) of the inner layer (800) is covered with the outer layer (700) in the external part of the battery casing (300), the other end (800E1, 800E2) of the inner layer (800) being exposed to the internal space of the battery casing (300), or
both ends (800E1, 800E2) of the inner layer are is covered with the outer layer (700), respectively in the internal part of the battery casing (300) and in the external part of the battery casing (300).

2. The secondary battery (100) according to claim 1, wherein the outer surface of the inner layer (800) and the inner surface of the outer layer (700) are adhered to each other.

3. The secondary battery (100) according to claim 1, wherein the outer layer (700) is partially disposed between the inner layer (800) and one surface of the electrode lead (400, 500).

4. The secondary battery (100) according to claim 1, wherein the battery casing (300) comprises an upper casing (310) and a lower casing (320),
an upper sealing portion (310S) of the upper casing (310) and a lower sealing portion (320S) of the lower casing (320) being bound to each other, and
the lead film (600) being disposed between the upper sealing portion (310S) and the lower sealing portion (320S),
wherein the lead film (600) is formed to have a larger length as compared to the upper sealing portion (310S) and the lower sealing portion (320S) in the direction of protrusion of the electrode lead (400, 500), and the lead film (600) is exposed in each of the internal part and external part of the battery casing (300).

5. The secondary battery (100) according to claim 4, wherein the area of the lead film (600) exposed outside of the battery casing (300) is the same as the area of the lead film (600) exposed inside of the battery casing (300).

6. The secondary battery (100) according to claim 4, wherein the area of the lead film (600) exposed outside of the battery casing (300) is larger than the area of the lead film (600) exposed inside of the battery casing (300).

7. The secondary battery (100) according to claim 4, wherein the outer layer (700) comprises an upper outer layer (700U) disposed between the upper sealing portion (310S) and the electrode lead (400, 500), and a lower outer layer (700L) disposed between the lower sealing portion (320S) and the electrode lead (400, 500).

8. The secondary battery (100) according to claim 7, wherein the inner layer (800) comprises an upper inner layer (800U) covered with the upper outer layer (700U), and a lower inner layer (800L) covered with the lower outer layer (700L).

9. The secondary battery (100) according to claim 8, wherein the upper outer layer (700U) comprises a first upper outer layer (710U) and a second upper outer layer (720U), and
the upper inner layer (800U) is disposed between the first upper outer layer (710U) and the second upper outer layer (720U).

10. The secondary battery (100) according to claim 8, wherein the lower outer layer (700L) comprises a first lower outer layer (710L) and a second lower outer layer (720L), and
the lower inner layer (800L) is disposed between the first lower outer layer (710L) and the second lower outer layer (720L).

11. A battery module comprising the secondary battery (100) as defined in claim 1.

## Patentansprüche

1. Sekundärbatterie (100), umfassend:
• eine Elektrodenbaugruppe (200), die Elektrodenblätter (210, 220) und einen zwischen den Elektrodenblättern (210, 220) angeordneten Separator (230) umfasst;
• ein beutelartiges Batteriegehäuse (300), in dem die Elektrodenbaugruppe (200) aufgenommen ist;
• eine Elektrodenleitung (400, 500), die mit der Elektrodenbaugruppe (200) verbunden ist und aus dem Batteriegehäuse (300) herausragt; und
• einen Leitungsfilm (600), der die Elektrodenleitung (400, 500) abdeckt und zwischen der Elektrodenleitung (400, 500) und dem Batteriegehäuse (300) angeordnet ist,
wobei der Leitungsfilm (600) eine die Elektrodenleitung abdeckende Außenschicht (700) und eine innerhalb der Außenschicht (700) angeordnete Innenschicht (800) umfasst, und
die Innenschicht (800) ein Material umfasst, das im Vergleich zur Außenschicht (700) eine höhere Luftdurchlässigkeit aufweist,
**dadurch gekennzeichnet, dass** entweder:
• ein Ende (800E1, 800E2) der Innenschicht (800) mit der Außenschicht (700) im inneren Teil des Batteriegehäuses (300) abgedeckt ist, wobei das andere Ende (800E1, 800E2) der Innenschicht (800) zur Außenseite des Batteriegehäuses (300) freiliegt, oder
• ein Ende (800E1, 800E2) der Innenschicht (800) mit der Außenschicht (700) im äußeren Teil des Batteriegehäuses (300) abgedeckt ist, wobei das andere Ende (800E1, 800E2) der Innenschicht (800) zum Innenraum des Batteriegehäuses (300) freiliegt, oder
• beide Enden (800E1, 800E2) der Innenschicht jeweils im inneren Teil des Batteriegehäuses (300) and im äußeren Teil des Batteriegehäuses (300) mit der Außenschicht (700) abgedeckt sind.

2. Sekundärbatterie (100) nach Anspruch 1, wobei die Außenfläche der Innenschicht (800) und die Innenfläche der Außenschicht (700) aneinander haften.

3. Sekundärbatterie (100) nach Anspruch 1, wobei die Außenschicht (700) teilweise zwischen der Innenschicht (800) und einer Oberfläche der Elektrodenleitung (400, 500) angeordnet ist.

4. Sekundärbatterie (100) nach Anspruch 1, wobei das Batteriegehäuse (300) ein oberes Gehäuse (310) und ein unteres Gehäuse (320) umfasst,
wobei ein oberer Abdichtungsabschnitt (310S) des oberen Gehäuses (310) und ein unterer Abdichtungsabschnitt (320S) des unteren Gehäuses (320) miteinander verbunden sind, und
wobei der Leitungsfilm (600) zwischen dem oberen Abdichtungsabschnitt (310S) und dem unteren Abdichtungsabschnitt (320S) angeordnet ist,
wobei der Leitungsfilm (600) so ausgebildet ist, dass er im Vergleich zum oberen Abdichtungsabschnitt (310S) und zum unteren Abdichtungsabschnitt (320S) in der Überstandsrichtung der Elektrodenleitung (400, 500) eine größere Länge aufweist, und der Leitungsfilm (600) sowohl im inneren Teil als auch im äußeren Teil des Batteriegehäuses (300) freiliegt.

5. Sekundärbatterie (100) nach Anspruch 4, wobei die außerhalb des Batteriegehäuses (300) freiliegende Fläche des Leitungsfilms (600) gleich der innerhalb des Batteriegehäuses (300) freiliegenden Fläche des Leitungsfilms (600) ist.

6. Sekundärbatterie (100) nach Anspruch 4, wobei die außerhalb des Batteriegehäuses (300) freiliegende Fläche des Leitungsfilms (600) größer als die innerhalb des Batteriegehäuses (300) freiliegende Fläche des Leitungsfilms (600) ist.

7. Sekundärbatterie (100) nach Anspruch 4, wobei die Außenschicht (700) eine obere Außenschicht (700U), die zwischen dem oberen Abdichtungsabschnitt (310S) und der Elektrodenleitung (400, 500) angeordnet ist, und eine untere Außenschicht (700L), die zwischen dem unteren Abdichtungsabschnitt (320S) und der Elektrodenleitung (400, 500) angeordnet ist, umfasst.

8. Sekundärbatterie (100) nach Anspruch 7, wobei die Innenschicht (800) eine obere Innenschicht (800U), die mit der oberen Außenschicht (700U) abgedeckt ist, und eine untere Innenschicht (800L), die mit der unteren Außenschicht (700L) abgedeckt ist, umfasst.

9. Sekundärbatterie (100) nach Anspruch 8, wobei die obere Außenschicht (700U) eine erste obere Außenschicht (710U) und eine zweite obere Außenschicht (720U) umfasst, und
die obere Innenschicht (800U) zwischen der ersten oberen Außenschicht (710U) und der zweiten oberen Außenschicht (720U) angeordnet ist.

10. Sekundärbatterie (100) nach Anspruch 8, wobei die untere Außenschicht (700L) eine erste untere Außenschicht (710L) und eine zweite untere Außenschicht (720L) umfasst, und
die untere Innenschicht (800L) zwischen der ersten unteren Außenschicht (710L) und der zweiten unteren Außenschicht (720L) angeordnet ist.

11. Batteriemodul, umfassend die Sekundärbatterie (100) nach Anspruch 1.

## Revendications

1. Batterie secondaire (100) comprenant :
• un ensemble d'électrodes (200) comprenant des feuilles d'électrode (210, 220) et un séparateur (230) interposé entre les feuilles d'électrode (210, 220) ;
• un boîtier de batterie de type poche (300) dans lequel l'ensemble d'électrodes (200) est reçu ;
• une languette d'électrode (400, 500) connectée à l'ensemble d'électrodes (200) et faisant saillie hors du boîtier de batterie (300) ; et
• un film de languette (600) recouvrant la languette d'électrode (400, 500) et interposé entre la languette d'électrode (400, 500) et le boîtier de batterie (300),
dans laquelle le film de languette (600) comprend une couche externe (700) recouvrant la languette d'électrode et une couche interne (800) disposée à l'intérieur de la couche externe (700), et
la couche interne (800) comprend un matériau ayant une perméabilité à l'air plus élevée par rapport à la couche externe (700),
**caractérisée en ce que** soit :
• une extrémité (800E1, 800E2) de la couche interne (800) est recouverte par la couche externe (700), dans la partie interne du boîtier de batterie (300), l'autre extrémité (800E1, 800E2) de la couche interne (800) étant exposée à l'extérieur du boîtier de batterie (300), soit
• une extrémité (800E1, 800E2) de la couche interne (800) est recouverte par la couche externe (700) dans la partie externe du boîtier de batterie (300), l'autre extrémité (800E1, 800E2) de la couche interne (800) étant exposée à l'espace interne du boîtier de batterie (300), soit
• les deux extrémités (800E1, 800E2) de la couche interne sont recouvertes par la couche externe (700), respectivement dans la partie interne du boîtier de batterie (300) et dans la partie externe du boîtier de batterie (300).

2. Batterie secondaire (100) selon la revendication 1, dans laquelle la surface externe de la couche interne (800) et la surface interne de la couche externe (700) adhèrent l'une à l'autre.

3. Batterie secondaire (100) selon la revendication 1, dans laquelle la couche externe (700) est partiellement disposée entre la couche interne (800) et une surface de la languette d'électrode (400, 500).

4. Batterie secondaire (100) selon la revendication 1, dans laquelle le boîtier de batterie (300) comprend un boîtier supérieur (310) et un boîtier inférieur (320),
une partie d'étanchéité supérieure (310S) du boîtier supérieur (310) et une partie d'étanchéité inférieure (320S) du boîtier inférieur (320) étant reliées l'une à l'autre, et
le film de languette (600) étant disposé entre la partie d'étanchéité supérieure (310S) et la partie d'étanchéité inférieure (320S),
dans laquelle le film de languette (600) est formé pour avoir une plus grande longueur par rapport à la partie d'étanchéité supérieure (310S) et à la partie d'étanchéité inférieure (320S) dans la direction de saillie de la languette d'électrode (400, 500), et le film de languette (600) est exposé dans chacune de la partie interne et de la partie externe du boîtier de batterie (300).

5. Batterie secondaire (100) selon la revendication 4, dans laquelle la surface du film de languette (600) exposée à l'extérieur du boîtier de batterie (300) est identique à la surface du film de languette (600) exposée à l'intérieur du boîtier de batterie (300).

6. Batterie secondaire (100) selon la revendication 4, dans laquelle la surface du film de languette (600) exposée à l'extérieur du boîtier de batterie (300) est plus grande que la surface du film de languette (600) exposée à l'intérieur du boîtier de batterie (300).

7. Batterie secondaire (100) selon la revendication 4, dans laquelle la couche externe (700) comprend une couche externe supérieure (700U) disposée entre la partie d'étanchéité supérieure (310S) et la languette d'électrode (400, 500), et une couche externe inférieure (700L) disposée entre la partie d'étanchéité inférieure (320S) et la languette d'électrode (400, 500).

8. Batterie secondaire (100) selon la revendication 7, dans laquelle la couche interne (800) comprend une couche interne supérieure (800U) recouverte par la couche externe supérieure (700U), et une couche interne inférieure (800L) recouverte par la couche externe inférieure (700L).

9. Batterie secondaire (100) selon la revendication 8, dans laquelle la couche externe supérieure (700U) comprend une première couche externe supérieure (710U) et une deuxième couche externe supérieure (720U), et
la couche interne supérieure (800U) est disposée entre la première couche externe supérieure (710U) et la deuxième couche externe supérieure (720U).

10. Batterie secondaire (100) selon la revendication 8, dans laquelle la couche externe inférieure (700L) comprend une première couche externe inférieure (710L) et une deuxième couche externe inférieure (720L), et
la couche interne inférieure (800L) est disposée entre la première couche externe inférieure (710L) et la deuxième couche externe inférieure (720L).

11. Module de batterie comprenant la batterie secondaire (100) telle que définie dans la revendication 1.
